# FASCICULE DE BREVET EUROPEEN

(11) **EP 3 584 113 B1**
(45) Date de publication et mention de la délivrance du brevet: **30.12.2020**
(21) Numéro de dépôt: 18178188.1
(22) Date de dépôt: 18.06.2018
(51) Int. Cl.: B60P 1/28, B65D 88/54

(54) **PERFECTIONNEMENT À UNE BENNE COMPRENANT UN OUTIL DE DÉCOLLEMENT**
PERFEKTIONIERUNG EINER KIPPWANNE, DIE EIN ABLÖSUNGSWERKZEUG UMFASST
IMPROVEMENT TO A BUCKET COMPRISING A RELEASE TOOL

(43) Date de publication de la demande: 25.12.2019
(73) Titulaire: Cembox, 44810 Heric (FR)
(72) Inventeur: Lebrequier, Daniel, 44810 Heric (FR)
(74) Mandataire: Tournel, Jean Louis

(56) Documents cités:
- EP-A1- 2 363 261
- FR-A1- 2 944 488
- FR-A1- 3 056 138
- NL-A- 8 006 176
- US-A1- 2015 375 661

## Description

Perfectionnement à une benne comprenant un outil de décollement.

L'invention se rapporte à une du type benne à rebut de béton comprenant un outil de décollement.

Les centrales à béton produisent du béton qui, par des camions toupies, est distribué sur les chantiers situés à proximité de la centrale.

Souvent ces camions avec une toupie de mélange reviennent charger avec un reste de béton.

Ce reste de béton ne peut être utilisé et il faut donc l'extraire de la toupie et l'éliminer ou le recycler.

Il est connu de stocker ce reste de béton dans une benne qui, placée au sol peut être hissée ensuite sur un camion qui conduira la benne contenant les résidus vers un autre lieu où le béton sera déchargé.

Le béton qui se trouve dans la benne est déposé dans cette benne en un état malléable pour durcir au cours du temps et former un bloc. Lorsque ce bloc est formé il est difficile à extraire de la benne.

Pour faciliter son extraction, il est connu d'équiper la benne d'un outil de décollement.

C'est la face interne située à l'avant de la benne qui présente cet outil.

Cet outil de décollement EP 2 363 261 se présente sous la forme globale d'un coin ayant la pointe vers le haut suspendu à un levier dont l'une des extrémités est articulée sur un point de pivot de la benne tandis que l'autre extrémité porte un moyen pour y accrocher un crochet de levage, cette benne comportant une butée limitant l'amplitude de manœuvre du levier EP 2 363 261 A1 montre le préambule de la première revendication.

Comme on le comprend le coin est suspendu à son axe d'articulation présenté par le levier et lorsque le levier et basculé lors du levage de la benne le coin se déplace vers le haut en appui sur la face interne de la paroi avant de la benne ce qui a pour conséquence de pousser vers l'arrière de la benne le bloc de béton et donc de le décoller pour qu'il glisse plus facilement.Lent coin glisse sur la face interne de la paroi av

Ce système est efficace et fonctionne à peu près correctement. En effet on note qu'il se produit entre le dos du coin et la face interne de la paroi avant de la benne une accumulation de laitance qui se durcit mais qui offre peu de résistance.

La conséquence est que lorsque le coin est soulevé, il y a tout d'abord un écrasement de la couche de laitance en sorte que la face du coin tournée vers le bloc de béton se déplace vers la paroi avant au lieu de pousser le bloc. Lorsque la couche de laitance est écrasée alors le coin pousse le bloc de béton vers l'arrière. Le décollement du bloc se fait donc lorsque la benne est plus fortement inclinée ce qui est plus brutal.

Pour éviter ce phénomène, il faut nettoyer régulièrement derrière le coin. Pour cela à l'aide d'un pied de biche, périodiquement, on écarte le coin de la paroi avant et on élimine la couche de laitance avec un grattoir.

L'éloignement manuel du coin de la paroi avant est dangereux car il est lourd. On connait une benne EP2106967 comprenant dans sa paroi inférieure un volet destiné à décoller le bloc de béton.Un tel système est soumis à la laitance qui s'infiltre dans le mécanisme. On connait de NL 8 006 176 A un poussoir qui se déplace suivant l'axe longitudinal de la benne. Un tel mécanisme est encombrant. L'invention se propose d'apporter une solution.

A cet effet, l'invention se rapporte à une benne dont la paroi avant est équipée d'un outil de décollement en forme de coin, la pointe en haut, suspendu par un axe à un levier lequel levier est articulé en une extrémité sur la benne, son autre extrémité étant destinée à être saisie par un crochet de levage, l'amplitude du pivotement du levier étant limité par une butée cette benne étant caractérisée en ce qu'elle comprend un mécanisme produisant un glissement de l'outil, puis un pivotement de l'outil de décollement et puis après un blocage du pivotement le soulèvement de la benne.

L'invention sera bien comprise à l'aide de la description ci-après faite à titre d'exemple non limitatif en regard du dessin qui représente :

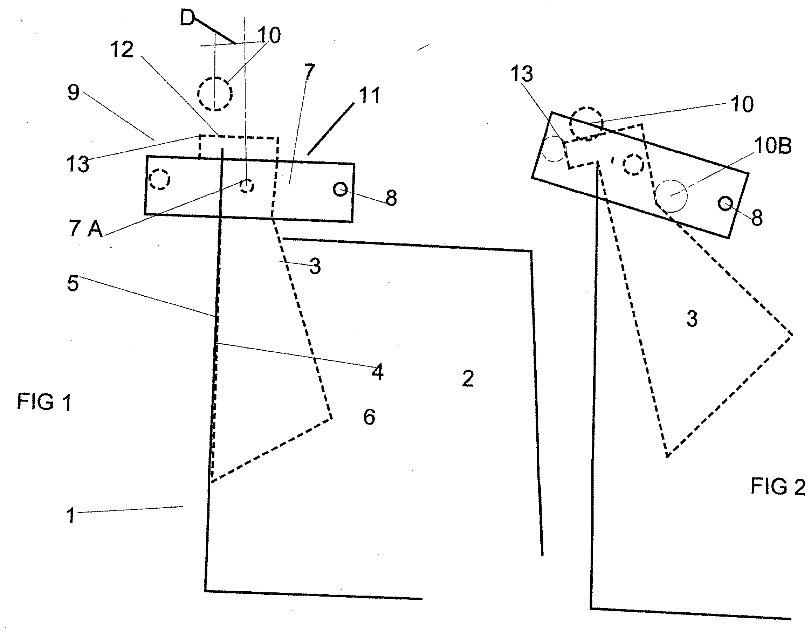

FIG 1 Vue de coté de l'avant d'une benne avec l'outil de décollement en position repos.
FIG 2 Vue de coté de l'outil de la figure 1 en position basculée
FIG3 superposition des positions repos et actif de l'outil de décollement

En se reportant au dessin, on voit une benne 1 destinée à contenir les rebuts de béton qui en se solidifiant vont former un bloc 2 qui doit être extrait de la benne. Pour cela l'avant de la benne est soulevée afin que le bloc glisse vers l'arrière. Pour faciliter cette opération, la benne présente à l'avant un outil 3 de décollement en forme de coin comprenant une face 4 en appui sur la face interne de la paroi 5 avant de la benne et une face 6 inclinée tournée vers le bloc de béton. La pointe du coin est orientée vers le haut. Le coin est suspendu au levier par un axe 7A situé entre les extrémité 8 et 9 du levier.

Il s'agit donc d'une benne dont la paroi avant est équipée d'un outil 3 de décollement suspendu à un levier 7 articulé en une extrémité 8 sur la benne, son autre extrémité 9 étant destinée à être saisie par un crochet de levage, l'amplitude du pivotement du levier étant limité par une butée 10.

Avantageusement, la benne comprend un mécanisme 11 produisant un pivotement de l'outil de décollement lors du soulèvement du levier de la benne. Selon une caractéristique le mécanisme 11 est constitué par la butée 10 qui est positionnée pour venir en appui sur l'outil 3 de décollement en une zone située à distance D de l'axe 7A d'articulation de l'outil de décollement créant ainsi un moment faisant pivoter le coin et l'écartant de sa position verticale.

La zone de contact 12 de l'outil 3 est donc à l'arrière du plan vertical contenant l'axe 7A d'articulation de l'outil et plus précisément du coin avec la pointe en haut.

Eventuellement, le haut du coin porte une table 13 en porte à faux pour constituer la zone d'appui 12 coopérant avec la butée 10. Cette table permet d'augmenter la distance D entre l'appui 12 et l'articulation 7A de la masse 3 suspendue donc le moment qui est appliqué pour la rotation de la dite masse.

Ainsi lorsqu'on soulève la benne avec le crochet de levage , le levier 7 pivote autour de l'axe 8 d'articulation et lève le coin qui glisse le long de la paroi5.

Lorsque le haut du coin rencontre la butée 10 le coin va alors pivoter et s'écarter de la face avant 5 de la benne Puis le pivotement du coin est stoppé par exemple par une butée 10B alors ce n'est qu'à ce moment-là que la benne se soulève.

Pendant ce mouvement le bloc de béton a été légèrement repoussé vers l'arrière.

Ainsi décollé, la masse de béton glissera plus facilement. Toute la force de levage a donc été appliquée au décollement de la masse de béton.

Un opérateur peut ainsi sans l'aide de quelqu'un nettoyer facilement derrière le coin avec une lame à gratter.

L'outil de décollement peut avoir une forme de coin en vue de profil mais également une autre forme à savoir depuis le haut une zone d'épaisseur constante (l'épaisseur étant vue dans le sens avant arrière) prolongée par une zone dont l'épaisseur augmente suivie ensuite par une zone dont l'épaisseur se réduit.

Ainsi la poussée de l'outil se fait à distance du fond de la benne avec un effet de soulèvement retardé de la benne. L'opérateur peut ainsi intervenir dégager l'arrière du coin en se déplaçant dans une benne horizontale.

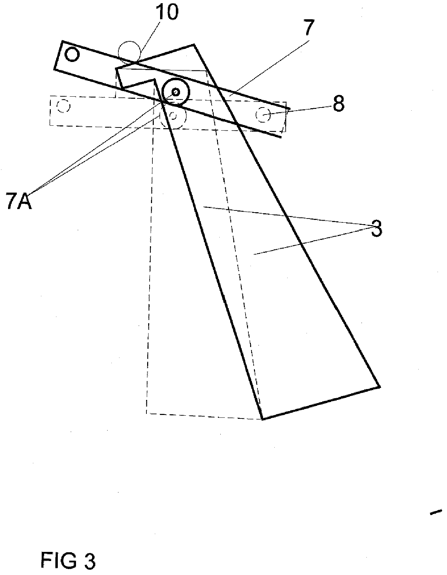

La figure 3 montre en pointillé la position du mécanisme au repos et en trait plein le mécanisme ayant fait basculer le coin.

## Revendications

1. Benne dont la paroi avant est équipée d'un outil (3) de décollement en forme de coin, la pointe du coin étant orientée vers le haut suspendu à un axe sur un levier (7) articulé en une extrémité (8) sur la benne, son autre extrémité (9) étant destinée à être saisie par un crochet de levage, l'amplitude du pivotement du levier étant limité par une butée (10) **caractérisée en ce que** la benne comprend un mécanisme (11) produisant, lors du soulèvement du levier, un glissement de l'outil le long de la paroi (5) de la benne puis un pivotement de l'outil (3) de décollement puis après un blocage du pivotement, le levage de la benne.

2. Benne selon la revendication 1 **caractérisée en ce que** le mécanisme (11) est constitué par la butée (10) qui est positionnée pour venir en appui sur l'outil (3) de décollement en une zone (12) dite de contact située à distance de l'axe (7A) d'articulation de l'outil de décollement créant ainsi un moment faisant pivoter le coin et l'écartant de sa position verticale.

3. Benne selon la revendication 2 **caractérisée en ce que** la zone de contact (12) de l'outil est à l'arrière du plan vertical contenant l'axe (7A) d'articulation de l'outil et plus précisément du coin inversé.

4. Benne selon la revendication 3 **caractérisée en ce que** le haut du coin porte une table (13) en porte à faux pour constituer la zone (12) d'appui coopérant avec la butée (10).

## Patentansprüche

1. Schaufel, deren Vorderwand mit einem keilförmigen Schälwerkzeug (3) ausgestattet ist, wobei die Spitze des Keils nach oben zeigt und an einer Achse an einem Hebel (7) aufgehängt ist, der an einem Ende (8) an der Schaufel angelenkt ist, wobei sein anderes Ende (9) zum Ergreifen durch einen Hebehaken vorgesehen ist, wobei die Amplitude des Schwenkens des Hebels durch einen Anschlag (10) begrenzt ist, **dadurch gekennzeichnet, dass** die Schaufel einen Mechanismus (11) umfasst, der beim Anheben des Hebels ein Gleiten des Werkzeugs entlang der Wand (5) der Schaufel und ein Schwenken des Schälwerkzeugs (3), dann, nach Blockieren der Verschwenkung, das Anheben der Schaufel bewirkt.

2. Schaufel nach Anspruch 1, **dadurch gekennzeichnet, dass** der Mechanismus (11) aus dem Anschlag (10) besteht, der so positioniert ist, dass er auf das Schälwerkzeug (3) in einem Bereich (12) einwirkt, der als Kontaktbereich bezeichnet wird und sich in einem Abstand von der Schwenkachse (7A) des Schälwerkzeugs befindet und so ein Moment erzeugt, das den Keil aus seiner vertikalen Position schwenkt und davon beabstandet.

3. Schaufel nach Anspruch 2, **dadurch gekennzeichnet, dass** sich der Kontaktbereich (12) des Werkzeugs auf der Rückseite der vertikalen Ebene befindet, die die Schwenkachse (7A) des Werkzeugs enthält, insbesondere des gegenüberliegenden Keils.

4. Schaufel nach Anspruch 3, **dadurch gekennzeichnet, dass** die Oberseite des Keils einen freitragenden Tisch (13) trägt, um den Kontaktbereich (12) zu bilden, der mit dem Anschlag (10) zusammenwirkt.

## Claims

1. Skip, the front wall of which is equipped with a wedge-shaped release tool (3), the apex of the wedge being oriented upwards, suspended from an axis on a lever (7) articulated at one end (8) on the skip, its other end (9) being intended to be grabbed by a lifting hook, the pivoting range of the lever being limited by a stop (10), **characterised in that** the skip comprises a mechanism (11) producing, when the lever is raised, a sliding of the tool along the wall (5) of the skip, then a pivoting of the release tool (3) then, after blocking of the pivoting, the lifting of the skip.

2. Skip according to claim 1, **characterised in that** the mechanism (11) consists of the stop (10) which is positioned in such a way as to be supported on the release tool (3) in a contact area (12), as it is known, situated at a distance from the axis (7A) of articulation of the release tool, thereby creating a moment causing the wedge to pivot and moving it from its vertical position.

3. Skip according to claim 2, **characterised in that** the contact area (12) of the tool is behind the vertical plane containing the axis (7A) of articulation of the tool and more particularly of the inverted wedge.

4. Skip according to claim 3, **characterised in that** the top of the wedge carries a cantilevered table (13) to constitute the support area (12) cooperating with the stop (10) .
